# EUROPEAN PATENT SPECIFICATION

(11) **EP 3 199 667 B1**
(45) Date of publication and mention of the grant of the patent: **20.03.2019**
(21) Application number: 16856473.0
(22) Date of filing: 12.10.2016
(51) Int. Cl.: C25D 9/08, C25B 1/00, H01M 4/38

(54) **METHOD FOR PRODUCING SILICON-PLATED METAL PLATE**
VERFAHREN ZUR HERSTELLUNG EINER SILICIUMBESCHICHTETEN METALLPLATTE
PROCÉDÉ DE PRODUCTION DE PLAQUE MÉTALLIQUE REVÊTUE DE SILICIUM

(30) Priority: 27.10.2015 JP 2015211331
(43) Date of publication of application: 02.08.2017
(73) Proprietor: NIPPON STEEL & SUMITOMO METAL CORPORATION, Chiyoda-ku, Tokyo 100-8071 (JP)
(72) Inventor: DATE, Hiromitsu, Tokyo 100-8071 (JP); FUJII, Takashi, Tokyo 100-8071 (JP); UEDA, Mikito, Sapporo-shi Hokkaido 060-8628 (JP)
(74) Representative: Vossius & Partner Patentanwälte Rechtsanwälte mbB
(86) International application number: PCT/JP2016/080266
(87) International publication number: WO 2017/073330

(56) References cited:
- JP-A- 2002 194 586
- JP-A- 2007 231 301
- JP-A- 2013 011 012
- JP-A- 2015 038 244
- US-A1- 2015 050 816
- S. V. KUZNETSOVA ET AL: "Voltammetric study of electroreduction of silicon complexes in a chloride-fluoride melt", RUSSIAN JOURNAL OF ELECTROCHEMISTRY, vol. 45, no. 7, 1 July 2009 (2009-07-01), pages 742-748, XP055471681, RU ISSN: 1023-1935, DOI: 10.1134/S1023193509070052
- DATABASE WPI Week 201208 Thomson Scientific, London, GB; AN 2011-L61548 XP002780686, & CN 102 154 659 A (UNIV NORTHEASTERN) 17 August 2011 (2011-08-17)
- DATABASE WPI Week 201370 Thomson Scientific, London, GB; AN 2013-L35087 XP002780687, & KR 2013 0060664 A (KOREA INST ENERGY RES) 10 June 2013 (2013-06-10)

## Description

### Technical Field

The present disclosure relates to a method of producing a silicon-plated metal sheet.

### Background Art

Techniques related to plating are conventionally known.

For example, Patent Document 1 has disclosed a lithium-ion secondary battery negative electrode including a metal foil current collector having discontinuous granular tin plating on at least one surface, wherein the granular tin plating has an average diameter in the planar direction of the current collector of from 0.5 µm to 20 µm, and wherein a lower part of the granular tin plating forms a layer alloyed with the metal of the current collector. The lithium-ion secondary battery negative electrode disclosed in Patent Document 1 is characterized by having excellent charge and discharge cycle characteristics.

However, tin (Sn) has a theoretical capacity of 994 mAh/g, whereas silicon (Si) has a theoretical capacity of 4,200 mAh/g, and thus to achieve a higher energy density, Si is more suitable than Sn as a negative electrode active material of a lithium-ion secondary battery negative electrode.

Examples of conventional methods for forming a Si film on a metal foil current collector include chemical vapor deposition; and the application of a mixture of fine Si particles, a conductivity aid, and a binder to a current collector, followed by drying. These conventional methods, however, involve high production costs.

Thus, Non-Patent Document 1 has focused on electrolytic deposition, which can achieve a lower cost, and reported that adding SiCl₄ to 1-Methyl-1-propylpyrrolidinium bis (trifluoromethanesulfonyl) imide, which has a highest electrical conductivity among TFSI ionic liquids, can provide a Si electrodeposit having a purity of 97 at%.

This technique, however, is disadvantageous in that the Si electrodeposit has a high resistivity at around room temperature, and thus the electrodeposit is difficult to form into a thick film and is formed at an insufficient rate.

Thus, Non-Patent Documents 2 and 3 have disclosed the electrodeposition of a Si film by constant-current electrolysis using a molten salt having a higher temperature than ionic liquids.

Non-Patent Document 2 has reported that a Si film can be formed by performing Si electrodeposition by constant-current electrolysis in a system containing molten LiF-NaF-KF at 1,018 K with K₂SiF₆ added with varying K₂SiF₆ concentrations and current densities.

Non-Patent Document 3 has reported that a dense and flat Si film can be formed by performing Si electrodeposition by constant-current electrolysis in a system containing molten KF-KCl at 923 K with K₂SiF₆ added with varying K₂SiF₆ concentrations and current densities.

Patent Document 1: Japanese Patent Application Laid-Open (JP-A) No. 2013-225437
Non-Patent Document 1: Abstracts of Autumn Meeting of the Electrochemical Society of Japan, vol. 2014, p. 65 (2014)
Non-Patent Document 2: G. M. Rao, D. Elwell, R. S. Feigelson, J. Electrochem. Soc., 127, p. 1940-1944 (1980)
Non-Patent Document 3: The 46th Symposium on Molten Salt Chemistry, 39, (2014)

### SUMMARY OF INVENTION

### Problems to be Solved by the Invention

However, the molten-salt electrolytic bath (plating bath) containing molten LiF-NaF-KF with K₂SiF₆ added, described in Non-Patent Document 2, and the molten-salt electrolytic bath (plating bath) containing molten KF-KCi with K₂SiF₆ added, described in Non-Patent Document 3, both have high temperatures. Therefore, the methods described in these documents disadvantageously involve high production costs.

Furthermore, the molten-salt electrolytic bath described in Non-Patent Document 2 is difficult to wash with water after plating because of the low solubility of LiF in water, which can lead to complexity in the production of a plated metal sheet.

Thus, an object in one aspect of the present invention is to provide a method of producing a silicon-plated metal sheet, by which method a silicon-plated metal sheet can be readily and inexpensively produced.

### Means for Solving the Problems

To solve the problems described above, the means include the following aspects.
<1> A method of producing a silicon-plated metal sheet, comprising:
   melting at least one of a silicon-containing alkali metal salt or a silicon-containing ammonium salt in a molten salt comprising lithium chloride, potassium chloride, and an alkali metal fluoride to prepare a molten-salt electrolytic bath; and
   performing constant-current pulse electrolysis or constant-potential pulse electrolysis with a metal sheet, serving as a cathode, immersed in the molten salt electrolytic bath under conditions of a pulse duration of from 0.1 seconds to 3.0 seconds and a duty ratio of from 0.5 to 0.94 to thereby form a silicon layer on the metal sheet.
<2> The method of producing a silicon-plated metal sheet according to <1>, wherein the alkali metal fluoride is at least one selected from the group consisting of sodium fluoride, lithium fluoride, and potassium fluoride.
<3> The method of producing a silicon-plated metal sheet according to <1> or <2>, wherein the molten-salt electrolytic bath is prepared by melting at least the silicon-containing alkali metal salt in the molten salt.
<4> The method of producing a silicon-plated metal sheet according to any one of <1> to <3>, wherein the silicon-containing alkali metal salt is Na₂SiF₆.
<5> The method of producing a silicon-plated metal sheet according to any one of <1> to <4>, wherein the pulse duration in the constant-current pulse electrolysis or the constant-potential pulse electrolysis totals from 60 seconds to 1,800 seconds.
<6> The method of producing a silicon-plated metal sheet according to any one of <1> to <5>, wherein the metal sheet is a metal foil having a thickness of 10 µm to 15 µm.
<7> The method of producing a silicon-plated metal sheet according to any one of <1> to <6>, wherein the molten salt contains the alkali metal fluoride in an amount of from 2 mol% to 3.5 mol%.
<8> The method of producing a silicon-plated metal sheet according to any one of <1 > to <7>, wherein the molten salt contains the lithium chloride in an amount of from 53 mol% to 59 mol%, the potassium chloride in an amount of from 38 mol% to 44 mol%, and the alkali metal fluoride in an amount of from 2 mol% to 3.5 mol%.
<9> The method of producing a silicon-plated metal sheet according to any one of <1> to <8>, wherein the molten-salt electrolytic bath contains the silicon-containing alkali metal salt and the silicon-containing ammonium salt in a total amount of from 0.01 mol% to 5.0 mol% with respect to a total amount of the molten salt.
<10> The method of producing a silicon-plated metal sheet according to any one of <1> to <9>, wherein the silicon layer is formed by the constant-current pulse electrolysis under the conditions.
<11> The method of producing a silicon-plated metal sheet according to <10>, wherein the constant-current pulse electrolysis is carried out at a cathode current density during electrification of 0.3 A/dm² to 3.0 A/dm².
<12> The method of producing a silicon-plated metal sheet according to any one of <1 > to <11>, wherein the constant-current pulse electrolysis or the constant-potential pulse electrolysis is carried out with the metal sheet immersed in the molten-salt electrolytic bath maintained at a temperature of from 473 K to 873 K.
<13> The method of producing a silicon-plated metal sheet according to any one of <1> to <12>, wherein the silicon layer is a dendritic silicon layer comprising 99% by mass or more Si with the remainder being impurities.

### Effects of the Invention

According to one aspect of the invention, a method of producing a silicon-plated metal sheet is provided, by which method a silicon-plated metal sheet can be readily and inexpensively produced.

### BRIEF DESCRIPTION OF DRAWINGS

FIG. 1 is a cyclic voltammogram of G.C. obtained by cyclic voltammetry in Examples 1 and 2.
FIG. 2 shows the XRD results of Ag sheets on which electrodeposits are formed by constant-potential pulse electrolysis in Examples 1 and 2.
FIG. 3A is an SEM micrograph of a cross section of an electrodeposit formed by constant-potential pulse electrolysis (Turn-on time, 1 sec; Turn-off time, 0.1 sec; 0.91 Hz) in Example 1.
FIG. 3B is an SEM micrograph of a cross section of an electrodeposit formed by constant-potential pulse electrolysis (Turn-on time, 0.1 sec; Turn-off time, 0.1 sec; 5 Hz) in Example 2.
FIG. 4 is a schematic diagram illustrating a pulse shape of constant-current pulse Turn-on times and Turn-off times in constant-current pulse electrolysis in Examples 101 to 103.
FIG. 5 is an SEM micrograph of the surface of a silicon-plated copper foil of Example 101.
FIG. 6 is an SEM micrograph of the surface of a silicon-plated copper foil of Example 102.
FIG. 7 is an SEM micrograph of the surface of a silicon-plated copper foil of Example 103.
FIG. 8 is an SEM micrograph of the surface of a silicon-plated copper foil of Comparative Example 101.
FIG. 9 is an SEM micrograph of a cross section of a silicon-plated Ag sheet of Example 115.
FIG. 10 is a graph showing the charge-discharge test results of Example 201, Comparative Example 201, and Comparative Example 202.

### DESCRIPTION OF EMBODIMENTS

Every numerical range expressed using "from ... to ..." throughout this specification means a range including the numerical values before and after "to" as a lower limit and an upper limit.

### Method of Producing Silicon-Plated Metal Sheet

A method of producing a silicon-plated metal sheet according to the disclosure (hereinafter also referred to as a "production method of the disclosure") comprises:
melting at least one of a silicon-containing alkali metal salt or a silicon-containing ammonium salt (hereinafter also referred to as a "Si source") in a molten salt consisting of lithium chloride (LiCl), potassium chloride (KCl), and an alkali metal fluoride to prepare a molten-salt electrolytic bath; and
performing constant-current pulse electrolysis or constant-potential pulse electrolysis with a metal sheet, serving as a cathode, immersed in the molten-salt electrolytic bath under conditions of a pulse duration of from 0.1 seconds to 3.0 seconds and a duty ratio of from 0.5 to 0.94 to thereby form a silicon layer on the metal sheet.

As used herein, "silicon layer" generally means an electrodeposit containing Si and impurities. In other words, the concept of the silicon layer in this specification encompasses not only membranous (continuous-layer-like) electrodeposits but also electrodeposits having a space between crystals (e.g., a dendritic electrodeposit).

In this specification, a dendritic electrodeposit containing Si and impurities is also referred to as a "dendritic silicon layer".

According to the production method of the disclosure, a silicon-plated metal sheet structured to have a metal sheet and a silicon layer disposed thereon can be readily and inexpensively produced.

Specifically, the molten salt and the molten-salt electrolytic bath for use in the production method of the disclosure have a low melting point due to the formation of a LiCl-KCl eutectic salt. Thus, according to the production method of the disclosure, as compared with the techniques described in Non-Patent Document 2 or 3, the production of a silicon-plated metal sheet (i.e., the formation of a silicon layer) can be carried out in a low-temperature molten-salt electrolytic bath, and thus the silicon-plated metal sheet can be more inexpensively produced.

The molten salt and the molten-salt electrolytic bath for use in the production method of the disclosure both have higher water solubility than LiF-NaF-KF and a molten-salt electrolytic bath of LiF-NaF-KF with K₂SiF₆ added (i.e., the molten salt and the molten-salt electrolytic bath described in Non-Patent Document 2) and thus are easy to wash with water after plating (i.e., after the formation of a silicon layer by electrolysis). Thus, the production method of the disclosure readily provides a silicon-plated metal sheet as compared with the technique described in Non-Patent Document 2.

According to the production method of the disclosure, a silicon layer having high adhesion to a metal sheet can be formed by forming the silicon layer by constant-current pulse electrolysis or constant-potential pulse electrolysis, as compared with a case in which the silicon layer is formed by non-pulse electrolysis (see Examples 101 to 103 and Comparative Example 101 described below).

According to the production method of the disclosure, a silicon layer having a larger thickness (hereinafter also referred to as "layer thickness") can be formed by forming the silicon layer by constant-current pulse electrolysis or constant-potential pulse electrolysis, as compared with a case in which the silicon layer is formed by non-pulse electrolysis (see Examples 101 to 103 and Comparative Example 101 described below).

A description will now be given of a preferred aspect of the production method of the disclosure.

In the production method of the disclosure, at least one of a silicon-containing alkali metal salt or a silicon-containing ammonium salt is melted in a molten salt consisting of lithium chloride (LiCl), potassium chloride (KCl), and an alkali metal fluoride to prepare a molten-salt electrolytic bath.

The advantages of this molten salt are the low melting point due to the formation of a LiCl-KCl eutectic salt and the higher water solubility than that of the LiF-NaF-KF molten salt described in Non-Patent Document 2, as described above.

The at least one of a silicon-containing alkali metal salt or a silicon-containing ammonium salt melted in the molten salt is a silicon source (Si source) for forming a silicon layer. In the constant-current pulse electrolysis or the constant-potential pulse electrolysis described below, a silicon layer is formed from the silicon (Si) contained in these salts.

Hereinafter, the "at least one of a silicon-containing alkali metal salt or a silicon-containing ammonium salt" melted in the molten salt is also referred to as the "Si source" for short.

The alkali metal fluoride in the molten salt is preferably at least one selected from the group consisting of sodium fluoride (NaF), lithium fluoride (LiF), and potassium fluoride (KF).

The amount of alkali metal fluoride in the molten salt is preferably from 2 mol% to 3.5 mol%.

An alkali metal fluoride in an amount of 2 mol% or more facilitates the formation of the molten salt, leading to higher stability of the molten salt.

An alkali metal fluoride in an amount of 3.5 mol% or less enhances the water solubility of the molten-salt electrolytic bath, facilitating washing with water after the formation of a silicon layer.

In a particularly preferred aspect of the molten salt, the amount of lithium chloride in the molten salt is from 53 mol% to 59 mol%; the amount of potassium chloride in the molten salt is from 38 mol% to 44 mol%; and the amount of alkali metal fluoride in the molten salt is from 2 mol% to 3.5 mol%.

As described above, the molten-salt electrolytic bath is prepared by melting a Si source, i.e., at least one of a silicon-containing alkali metal salt or a silicon-containing ammonium salt, in the molten salt.

In a preferred aspect of the disclosure, the molten-salt electrolytic bath is prepared by melting at least a silicon-containing alkali metal salt in the molten salt. In this aspect, as compared with a case in which a silicon-containing ammonium salt is melted but a silicon-containing alkali metal salt is not melted, a thicker silicon layer can be formed.

The silicon-containing alkali metal salt is preferably Na₂SiF₆, K₂SiF₆, or Li₂SiF₆, particularly preferably Na₂SiF₆.

The silicon-containing ammonium salt is preferably (NH₄)₂SiF₆.

The Si source (i.e., at least one of a silicon-containing alkali metal salt or a silicon-containing ammonium salt) preferably contains a silicon-containing alkali metal salt, more preferably contains at least one selected from the group consisting of Na₂SiF₆. K₂SiF₆, and Li₂SiF₆, particularly preferably contains Na₂SiF₆.

The total amount of silicon-containing alkali metal salt and silicon-containing ammonium salt (i.e., the total amount of Si source) in the molten-salt electrolytic bath is preferably from 0.01 mol% to 5.0 mol% with respect to the total amount of the molten salt.

In the production method of the disclosure, constant-current pulse electrolysis or constant-potential pulse electrolysis is performed with a metal sheet, serving as a cathode, immersed in the molten-salt electrolytic bath under conditions of a pulse duration of from 0.1 seconds to 3.0 seconds and a duty ratio of from 0.5 to 0.94 to thereby form a silicon layer on the metal sheet.

This can form a silicon layer having higher adhesion to a metal sheet and a larger thickness than those of a silicon layer formed by constant-current electrolysis that is not constant-current pulse electrolysis (i.e., constant-current electrolysis where a constant current is in on state at all times) or constant-potential electrolysis that is not constant-potential pulse electrolysis (i.e., constant-potential electrolysis where a constant potential is in on state at all times), as described above.

In the constant-current pulse electrolysis or the constant-potential pulse electrolysis, the pulse duration is from 0.1 seconds to 3.0 seconds as described above.

A pulse duration of less than 0.1 seconds causes almost no Si electrodeposition.

A pulse duration of more than 3.0 seconds results in an electrodeposited Si having an elongated and collapse-prone shape. As a result, the electrodeposited Si tends to collapse to give a silicon layer having a small thickness and low adhesion to a metal layer.

In one cycle of a pulse in the constant-current pulse electrolysis or the constant-potential pulse electrolysis, the ratio of the time of electrification (i.e., the above-described pulse duration, hereinafter also referred to as "Turn-on time") to the total of Turn-on time and the time during which electrification is halted (hereinafter also referred to as "Turn-off time"), that is, a duty ratio is from 0.5 to 0.94.

A duty ratio of less than 0.5 means a high proportion of Turn-off time, which leads to low productivity and yields no improvement in shape and characteristics of electrodeposited Si.

A duty ratio of greater than 0.94 results in an electrodeposited Si having an elongated and collapse-prone shape. As a result, the electrodeposited Si tends to collapse to give a silicon layer having a small thickness and low adhesion to a metal layer.

The metal sheet, serving as a cathode, is not particularly limited.

Examples of the material of the metal sheet include copper, copper alloys, silver, silver alloys, steel, and stainless steel alloys. To enhance the adhesion to a silicon layer, copper, copper alloys, silver, and silver alloys are preferred, and copper and copper alloys are more preferred.

To enhance the adhesion to a silicon layer, the metal sheet may be a steel sheet or a stainless steel alloy sheet that is plated (e.g., with copper, a copper alloy, nickel, or silver).

The metal sheet may have any thickness. The thickness of the metal sheet can be, for example, 5 µm to 3 mm.

In one aspect, the metal sheet may be a metal foil. The metal foil preferably has a thickness of 5 µm to 20 µm, more preferably a thickness of 10 µm to 15 µm.

In another aspect, the metal sheet may be a metal sheet having a thickness of 0.1 mm to 3 mm.

The constant-current pulse electrolysis or the constant-potential pulse electrolysis in preferably carried out with the metal sheet immersed in the molten-salt electrolytic bath maintained at a temperature of from 473 K to 873 K. The temperature of the molten-salt electrolytic bath in the constant-current pulse electrolysis or the constant-potential pulse electrolysis is more preferably from 675 K to 873 K.

A temperature of the molten-salt electrolytic bath of 473 K or higher tends to reduce the viscosity of the molten-salt electrolytic bath to help provide the cathode with Si (IV), thus ensuring the amount of silicon electrodeposition (i.e., silicon layer thickness).

A temperature of the molten-salt electrolytic bath of 873 K or lower is advantageous in terms of energy cost (i.e., production cost).

In the constant-current pulse electrolysis or the constant-potential pulse electrolysis, the total pulse duration is set, as appropriate, in view of silicon layer thickness, Si source concentration, and other factors.

In view of productivity, the total pulse duration is preferably from 60 seconds to 1,800 seconds.

In the production method of the disclosure, the silicon layer is formed by constant-current pulse electrolysis or constant-potential pulse electrolysis, as described above.

In a preferred aspect of the production method of the disclosure, the silicon layer is formed by constant-current pulse electrolysis. In this aspect, a dense and flat silicon layer is more readily formed than in an aspect where the silicon layer is formed by constant-potential pulse electrolysis. This is probably because, in constant-current pulse electrolysis, it is easier to completely switch a current to 0 (zero) at Turn-off time. Specifically, in constant-current pulse electrolysis, the complete switching of a current to 0 (zero) at Turn-off time gives a rapid rise of a current at the moment of switching from Turn-off time to Turn-on time to adequately generate electrodeposition nuclei. As a result, a dense and flat silicon layer can be readily formed.

In the aspect where the silicon layer is formed by constant-current pulse electrolysis, the constant-current pulse electrolysis is preferably carried out at a cathode current density during electrification of 0.3 A/dm² to 3.0 A/dm².

A cathode current density during electrification of 0.3 A/dm² or more tends to ensure the amount of Si electrodeposition (i.e., silicon layer thickness).

A cathode current density during electrification of 3.0 A/dm² or less can reduce a phenomenon where a Si electrodeposit elongates and collapses. This tends to ensure the silicon layer thickness.

The constant-current pulse electrolysis or the constant-potential pulse electrolysis in the production method of the disclosure is preferably carried out in an environment containing less (preferably no) O₂ and H₂O.

One example of the environment containing less (preferably no) O₂ and H₂O is the inside of a hermetically sealed container filled with oxygen-free gas (e.g., Ar gas).

The cathode for use is preferably obtained by removing an oxide coating formed on a metal sheet with a weak acid, followed by washing with water and sufficient drying.

It is needless to say that the production method of the disclosure may include a step other than the preparation of a molten-salt electrolytic bath and the formation of a silicon layer described above.

Examples of the other steps include the step of washing the metal sheet (cathode) on which the silicon layer is formed with water to remove the molten salt and the Si source remaining on the metal sheet surface and the step of drying the metal sheet that has been washed with water.

There is no particular limitation on the specific aspect of the silicon layer formed by the production method of the disclosure.

Examples of the silicon layer formed by the production method of the disclosure include silicon membranes (i.e., membranous electrodeposits) and dendritic silicon layers (i.e., dendritic electrodeposits).

The silicon layer formed by the production method of the disclosure preferably has a thickness of from 1 µm to 30 µm.

The silicon layer formed by the production method of the disclosure is preferably a silicon layer containing 99% by mass or more Si with the remainder being impurities.

In a case in which the Si content of the silicon layer is 99% by mass or more, the characteristics of metal silicon are more effectively exhibited.

One example of the silicon layer formed by the production method of the disclosure is a dendritic silicon layer containing 99% by mass or more Si with the remainder being impurities.

The dendritic silicon layer is made of Si crystal grains that have grown perpendicularly to the metal sheet surface and are shaped like dendritic particles.

As used herein, "dendritic" means a branching shape formed by the three-dimensional growth of multiple branches from a primary limb into acicular or foliaceous form.

There is no particular limitation on the application of the silicon-plated metal sheet produced by the production method of the disclosure.

Examples of the application of the silicon-plated metal sheet produced by the production method of the disclosure include lithium-ion secondary battery negative electrodes and silicon solar cells.

When the silicon-plated metal sheet is used as a lithium-ion secondary battery negative electrode, the metal sheet of the silicon-plated metal sheet corresponds to a negative electrode collecting foil of a lithium-ion secondary battery negative electrode, and the silicon layer of the silicon-plated metal sheet corresponds to part or all of a negative electrode active material layer of a lithium-ion secondary battery negative electrode.

The negative electrode active material layer of a lithium-ion secondary battery negative electrode may contain a binder for the purpose of binding the silicon layer with the negative electrode collecting foil to retain the electrode structure. Examples of usable binders include thermoplastic resins, such as polyvinylidene fluoride (PVDF), polytetrafluoroethylene (PTFE), polyvinyl acetate, polyimide (PI), polyamide (PA), polyvinyl chloride (PVC), polymethyl acrylate (PMA), polymethyl methacrylate (PMMA), polyether nitrile (PEN), polyethylene (PE), polypropylene (PP), and polyacrylonitrile (PAN); epoxy resins; and polyurethane resins.

The negative electrode active material layer may also contain a conductivity aid as well as a binder.

Any conventionally known conductivity aids can be used, and examples include carbon materials such as carbon blacks, including acetylene black, graphite, and carbon fibers.

The negative electrode active material layer may be made of the silicon layer alone.

In the aspect where the negative electrode active material layer is made of the silicon layer alone, the silicon-plated metal sheet is used as it is as a lithium-ion secondary battery negative electrode.

The negative electrode active material layer may include the silicon layer and a layer that is disposed on the silicon layer and contains a binder and a conductivity aid.

A lithium-ion secondary battery negative electrode comprising a negative electrode active material layer including the silicon layer and a layer containing a binder and a conductivity aid can be formed, for example, by applying a slurry containing the binder and the conductivity aid to the silicon layer of the silicon-plated metal sheet.

### Examples

One aspect of the invention will now be described in more detail with reference to examples, but the following examples are not intended to limit the invention.

### Examples 1 and 2 (Constant-Potential Pulse Electrolysis)

In Examples I and 2, a molten-salt electrolytic bath obtained by adding Na₂SiF₆, serving as a Si source, to a molten salt consisting of LiCl, KCl, and NaF was subjected to cyclic voltammetry, and then using the molten-salt electrolytic bath and aAg sheet as an example of the metal sheet, a silicon-plated Ag sheet as an example of the silicon-plated metal sheet was produced by constant-potential pulse electrolysis.

In Example 1, the constant-potential pulse electrolysis was carried out under the conditions of an Turn-on time of 1 second, an Turn-off time of 0.1 seconds, a duty ratio of 0.91, and a frequency of 0.91 Hz.

In Example 2, the constant-potential pulse electrolysis was carried out under the conditions of an Turn-on time of 0.1 seconds, an Turn-off time of 0.1 seconds, a duty ratio of 0.5, and a frequency of 5 Hz.

A detailed description will be given below.

### Cyclic Voltammetry of Molten-Salt Electrolytic Bath

In a two-electrode cell placed in an electric furnace charged with Ar, 0.5 mol% Na₂SiF₆, serving as a Si source, was added to a molten salt in a composition ratio of LiCl:KCl:NaF = 56:41:3 (mol%) to prepare a molten-salt electrolytic bath. The temperature of the molten-salt electrolytic bath was adjusted to 773 K.

In the molten-salt electrolytic bath adjusted to a temperature of 773 K, glassy carbon (G.C.), serving as a working electrode, a carbon rod, serving as a counter electrode, and Si, serving as a reference electrode, were immersed, and the molten-salt electrolytic bath was subjected to cyclic voltammetry.

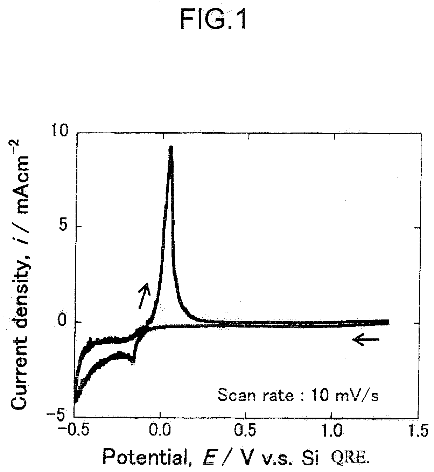

FIG. 1 is a cyclic voltammogram of G.C. obtained by cyclic voltammetry in Examples 1 and 2.

As shown in FIG. 1, when a potential (E) was scanned to the cathode side (see the left arrow in FIG. 1), a cathode current (i.e., a reduction current) increased near -0.04 V vs. Si QRE, showed a downward reduction peak near from -0.15 to -0.2 V vs. Si QRE, and then increased again. After the direction of scanning was reversed (i.e., when the potential was scanned to the anode side), the cathode current flowed until near -0.1 V vs. Si QRE, and then an anode current (i.e., an oxidation current) flowed (see the up arrow in FIG. 1). So the peaks of the reduction current and the oxidation current were observed at potentials not far from 0 V relative to the Si quasi-reference electrode. This suggests that these currents correspond to the electrodeposition and the dissolution of Si. These results show that the electrodeposition of Si due to the reduction of Si (IV) proceeded fast at -0.15 to -0.2 V vs. Si QRE, and there was almost no flow of a reduction current or an oxidation current near -0.1 V vs. Si QRE.

Based on these results, the conditions of constant-potential pulse electrolysis in Examples 1 and 2 were determined as follows: electrodeposition potential, -0.15 V vs. Si QRE; electrodeposition cessation potential, -0.1 V vs. Si QRE.

### Production of Silicon-Plated Ag Sheet by Constant-Potential Pulse Electrolysis

In a two-electrode cell placed in an electric furnace charged with Ar, the same molten salt-electrolytic bath as the above-described molten-salt electrolytic bath prepared for cyclic voltammetry was prepared. The temperature of the molten-salt electrolytic bath was adjusted to 773 K.

In the molten-salt electrolytic bath adjusted to a temperature of 773 K, a Ag sheet (3 cm²), serving as a working electrode (cathode), and a carbon rod, serving as a counter electrode, were immersed, and constant-potential pulse electrolysis was performed.

In Example 1, the constant-potential pulse electrolysis was performed under the conditions of an electrodeposition potential of -0.15 V, an electrodeposition cessation potential of -0.1 V, an electrodeposition Turn-on time per pulse of 1 second, an electrodeposition Turn-off time per pulse of 0.1 seconds, a duty ratio of 0.91, a frequency of 0.91 Hz, and a total quantity of electricity of-16 Ccm⁻² (theoretical film thickness: 5 µm).

In Example 2, the constant-potential pulse electrolysis was performed under the conditions of an electrodeposition potential of -0.15 V, an electrodeposition cessation potential of -0.1 V, an electrodeposition Turn-on time per pulse of 0.1 seconds, an electrodeposition Turn-off time per pulse of 0.1 seconds, a duty ratio of 0.5, a frequency of 5 Hz, and a total quantity of electricity of -16 Ccm⁻² (theoretical film thickness: 5 µm).

In both Examples 1 and 2, an electrodeposit was formed on the Ag sheet as a result of the constant-potential pulse electrolysis. After that, the Ag sheet was washed with water to remove the molten salt and the Si source that remained on the Ag sheet and then sufficiently dried to give an electrodeposited Ag sheet.

In both Examples 1 and 2, the average electrodeposit thickness calculated from the amount of electrodeposition was 4.4 µm.

### XRD of Electrodeposit

The electrodeposited Ag sheets obtained above were subjected to X-ray diffractometry (XRD).

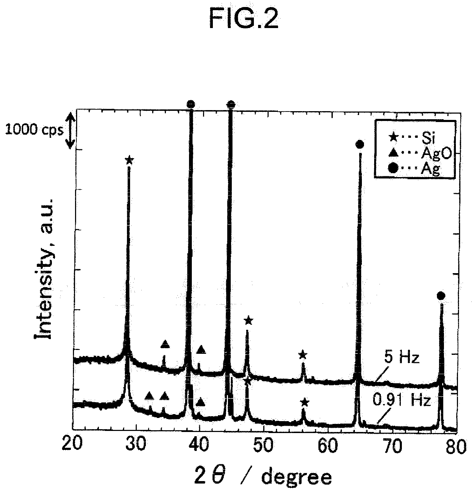

FIG. 2 shows the XRD results of the electrodeposited Ag sheets in Examples 1 and 2, that is, Ag sheets on which electrodeposits were formed by constant-potential pulse electrolysis.

In FIG. 2, "0.91 Hz" indicates the result of Example 1, and "5 Hz" indicates the result of Example 2.

In both Examples 1 and 2, the electrodeposit yielded showed a diffraction pattern equal to that of metal Si and thus was confirmed to be metal Si, as can be seen from FIG. 2.

### ICP-AES of Electrodeposit

The electrodeposits on the electrodeposited Ag sheets obtained above were each dissolved in hydrogen fluoride acid, and the resulting solutions were analyzed by ICP-atomic emission spectroscopy (ICP-AES).

The electrodeposits of Examples 1 and 2 were both determined to be a silicon layer having a Si purity of 99% by mass.

These results show that, in both Examples 1 and 2, a silicon-plated Ag structured to have a Ag sheet and a silicon layer in the form of an electrodeposit formed on the Ag sheet was obtained as an electrodeposited Ag sheet.

### SEM Surface Observation

The surfaces on the electrodeposit side of the electrodeposited Ag sheets (silicon-plated Ag sheets) were observed under a scanning electron microscope (SEM).

In both Examples I and 2, a nodular electrodeposition morphology was observed, and the different frequencies caused no significant difference in surface morphology of the electrodeposits.

### SEM Cross-Sectional Observation

Cross sections of electrodeposits on the electrodeposited Ag sheets (silicon-plated Ag sheets) were observed under an SEM.

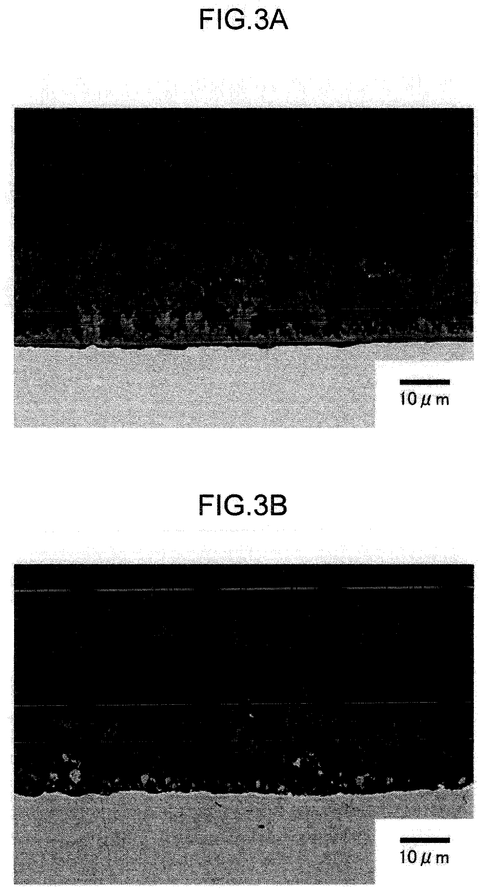

FIG. 3A is an SEM micrograph of a cross section of the electrodeposit formed by constant-potential pulse electrolysis (Turn-on time, 1 sec; Turn-off time, 0.1 sec; 0.91 Hz) in Example 1.

FIG. 3B is an SEM micrograph of a cross section of the electrodeposit formed by constant-potential pulse electrolysis (Turn-on time, 0.1 sec; Turn-off time, 0.1 sec; 5 Hz) in Example 2.

In both Examples 1 and 2, as shown in FIG. 3A and FIG. 3B, a dendritic electrodeposit was formed on the Ag sheet.

In particular, in Example 1, as shown in FIG. 3A, the dendritic electrodeposit was formed after one continuous silicon layer was formed on the Ag sheet.

### Examples 101 to 103 and Comparative Example 101 (Constant-Current Pulse Electrolysis)

### Production of Silicon-Plated Copper Foil by Constant-Current Pulse Electrolysis

In Examples 101 to 103, using a copper foil as an example of the metal sheet, a silicon-plated copper foil as an example of the silicon-plated metal sheet was produced by constant-current pulse electrolysis.

In Comparative Example 101, a silicon-plated copper foil for comparison was produced by constant-current electrolysis that is not constant-current pulse electrolysis, where a constant current is in on state at all times.

A detailed description will be given below.

In a two-electrode cell placed in an electric furnace charged with Ar, 0.5 mol% Na₂SiF₆, serving as a Si source, was added to a molten salt in a composition ratio of LiCl:KCl:NaF = 56:41:3 (mol%) to prepare a molten-salt electrolytic bath. The temperature of the molten-salt electrolytic bath was adjusted to 773 K.

In the molten-salt electrolytic bath adjusted to a temperature of 773 K, a copper sheet (specifically, a copper foil having a thickness of 10 µm and a size of 3 cm², hereinafter also referred to as a "copper foil" for short), serving as a cathode, and a carbon rod, serving as a counter electrode, were immersed, and constant-current electrolysis was carried out under the conditions shown in Table 1.

As shown in Table 1, the constant-current electrolysis in Examples 101 to 103 was constant-current pulse electrolysis where the constant current ON state and the current OFF state were repeated. In Examples 101 to 103, the current value in the current OFF state was 0 A/dm² (the same applies to Examples 104 to 114 described below).

By contrast, the constant-current electrolysis in Comparative Example 101 was constant-current electrolysis that is not constant-current pulse electrolysis, where a constant current is in on state at all times without a current off state.

In all of Examples 101 to 103 and Comparative Example 101, the constant-current electrolysis was carried out for such a time that the time of the constant current on state (Turn-on time) was 600 seconds in total.

As a result of the constant-current electrolysis, an electrodeposit was formed on the copper foil. After that, the copper foil was washed with water to remove the molten salt and the Si source that remained on the copper foil and then sufficiently dried to give an electrodeposited copper foil.

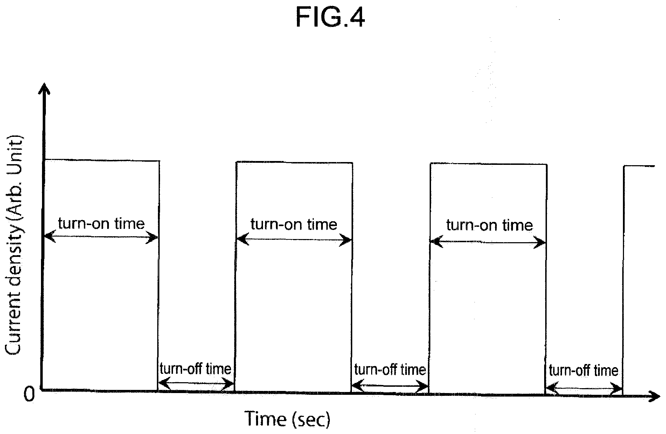

FIG. 4 is a schematic diagram illustrating a pulse shape of constant-current pulse Turn-on times and Turn-off times in the constant-current pulse electrolysis in Examples 101 to 103.

The Turn-on time in the pulse shape illustrated in FIG. 4 means a pulse duration and corresponds to Turn-on time (s) of constant-current pulse On conditions in Table 1.

The Turn-off time in the pulse shape illustrated in FIG. 4 corresponds to Turn-off time (s) of constant-current pulse OFF conditions in Table 1.

### Analysis of Electrodeposit

The electrodeposits on the electrodeposited copper foils obtained above were each dissolved in hydrogen fluoride acid, and the resulting solutions were analyzed by ICP-AES.

The electrodeposits of Examples 101 to 103 were all determined to be a silicon layer having a Si purity of 99% by mass or higher and containing less than 1 % by mass Cl as impurities.

The electrodeposit of Comparative Example 101 was determined to be a silicon layer having a Si purity of 98% by mass and containing 2% by mass Cl as impurities.

These results show that a silicon-plated copper foil structured to have a copper foil and a silicon layer in the form of an electrodeposit formed on the copper foil was obtained as an electrodeposited copper foil.

### Surface Observation

The surfaces on the electrodeposit (silicon layer) side of the silicon-plated copper foils were observed under an SEM, and SEM micrographs of the surfaces were taken.

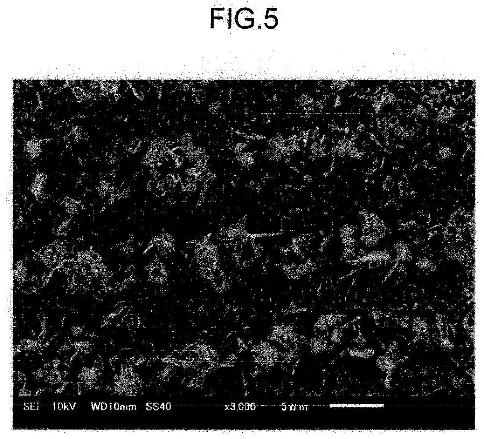

FIGs. 5 to 7 are SEM micrographs of the surfaces of the silicon-plated copper foils of Examples 101 to 103.

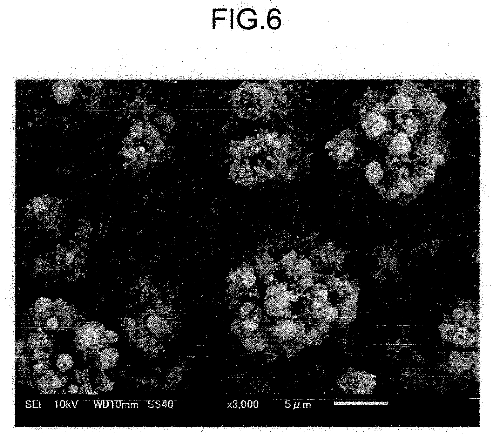

In Examples 101 and 102, as shown in FIGs. 5 and 6, the base copper foil was exposed in places, and 70% or less of the surface of the copper foil was covered with an electrodeposit made of dendritic Si crystal grains (i.e., a dendritic silicon layer).

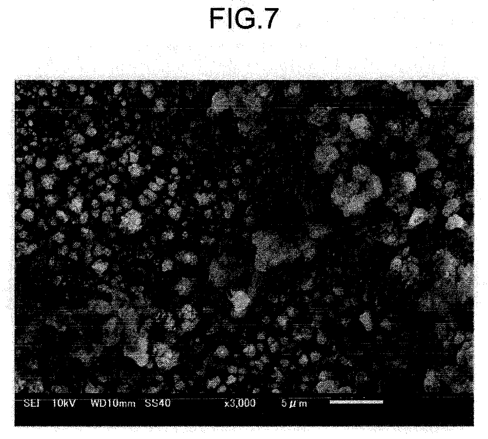

In Example 103, as shown in FIG. 7, the whole surface of the copper foil was covered with an electrodeposit made of Si crystal grains.

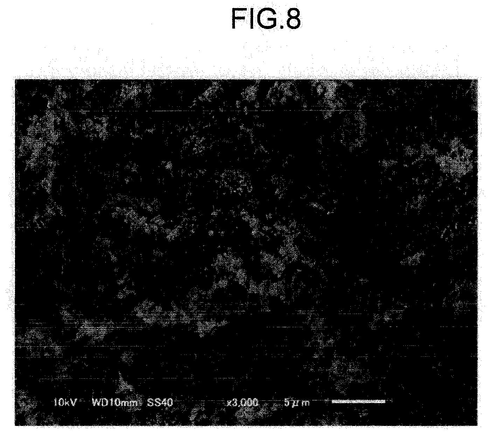

FIG. 8 is an SEM micrograph of the surface of the silicon-plated copper foil of Comparative Example 101.

Also in Comparative Example 101, as shown in FIG. 8, the surface of the copper foil was covered with an electrodeposit (Si crystal grains). The electrodeposit of Comparative Example 101, however, had poor adhesion to the base copper foil, and most of the electrodeposit were peeled off by water washing for removing the molten salt and the Si source.

### Measurement of Silicon Layer Thickness

Prior to the measurement of a silicon layer thickness, a sample of a silicon-plated copper foil embedded in resin was prepared, and a cross section of the sample was polished. The cross section of the silicon-plated copper foil of the sample was observed under a scanning electron microscope (SEM), and a cross-sectional SEM micrograph (not shown) was taken.

Using the cross-sectional micrograph, a silicon layer thickness (µm) was measured.

Here, the silicon layer thickness was defined as a maximum height of an electrodeposit (i.e., a silicon layer) from the surface of the copper foil.

The results are shown in Table 1.

### Evaluation of Adhesion between Silicon Layer and Copper Foil

In a silicon layer (an electrodeposit) of a silicon-plated copper foil, one hundred 2 mm squares (crosscuts) reaching the copper foil were formed with a cutter (A-300 NT cutter). Cellophane tape (CT-18 Cellotape (registered trademark) available from Nichiban Co., Ltd., 25 mm wide) was applied to the squares and then instantaneously peeled off perpendicularly to the copper foil. The cellophane tape peeled off was visually observed to evaluate the adhesion between the silicon layer and the copper foil according to the following criteria.

The results are shown in Table 1.

### Criteria for Evaluation of Adhesion between Silicon Layer and Copper Foil

A: There is no attachment of a silicon layer to cellophane tape peeled off: the adhesion between a silicon layer and a copper foil is excellent.
B: There is an attachment of a silicon layer to cellophane tape peeled off: the adhesion between a silicon layer and a copper foil is poor.

**Table 1**

| | Molten-Salt Electrolytic Bath | | | Molten-Salt Electrolytic Bath Temperature (K) | Constant-Current Pulse ON Conditions | | Constant-Current Pulse OFF Conditions | | Duty Ratio | Total Quantity of Electricity (Ccm⁻²) | Total Turn-on time (s) | Layer Thickness (µm) | Adhesion |
|---|---|---|---|---|---|---|---|---|---|---|---|---|---|
| | Molten Salt (mol%) | Si Source | | | Current Value (A/dm²) | Turn-on time (s) | Current Value (A/dm² | Turn-off time (s) | | | | | |
| | | Type | mol% with Respect to Molten Salt | | | | | | | | | | |
| Example 101 | LiCl:KCl:NaF = 56:41:3 | Na₂SiF₆ | 0.5 | 773 | 2.7 | 2.0 | 0 | 0.2 | 0.91 | 16 | 600 | 5 | A |
| Example 102 | LiCl:KCl:NaF = 56:41:3 | Na₂SiF₆ | 0.5 | 773 | 2.7 | 3.0 | 0 | 0.2 | 0.94 | 16 | 600 | 5 | A |
| Example 103 | LiCl:KCl:NaF = 56:41:3 | Na₂SiF₆ | 0.5 | 773 | 0.5 | 3.0 | 0 | 0.2 | 0.94 | 16 | 600 | 5 | A |
| Comparative Example 101 | LiCl:KCl:NaF = 56:41:3 | Na₂SiF₆ | 0.5 | 773 | 2.7 | 600 | - | - | - | 16 | 600 | 4 | B |

As shown in Table 1, the silicon layers of Examples 101 to 103, which were formed by constant-current pulse electrolysis, had larger thicknesses and higher adhesion to copper foil than the silicon layer of Comparative Example 101, which was formed by constant-current electrolysis where a constant current is in on state at all times.

### Examples 104 to 114

The same procedure as in Example 101 was repeated except that the combination of type of molten salt in molten-salt electrolytic bath, type of Si source in molten salt electrolytic bath, mol% of Si source with respect to molten salt, temperature of molten-salt electrolytic bath, and conditions of constant-current pulse electrolysis was changed to the combinations shown in Table 2.

The results are shown in Table 2.

**Table 2**

| | Molten-Salt Electrolytic Bath | | | Molten-Salt Electrolytic Bath Temperature | Constant-Current Pulse ON Conditions | | Constant-Current Pulse OFF Conditions | | Duty Ratio | Total Quantity of Electricity (Ccm⁻²) | Total Turn-on time (s) | Layer Thickness (µm) | Adhesion |
|---|---|---|---|---|---|---|---|---|---|---|---|---|---|
| | Molten Salt (mol%) | Si Source | | | Current Value (A/dm²) | Turn-on time (s) | Current Value (A/dm²) | Turn-off time (s) | | | | | |
| | | Type | mol% with Respect to Molten Salt | | | | | | | | | | |
| Example 104 | LiCl:KCl:NaF = 56:41:3 | Na₂SiF₆ | 0.5 | 773 | 2.7 | 1.0 | 0 | 1.0 | 0.5 | 16 | 600 | 5 | A |
| Example 105 | LiCl:KCl:NaF = 56:41:3 | Na₂SiF₆ | 0.5 | 625 | 2.7 | 2.0 | 0 | 0.2 | 0.91 | 16 | 600 | 5 | A |
| Example 106 | LiCl:KCl:NaF = 56:41:3 | Na₂SiF₆ | 0.5 | 873 | 2.7 | 2.0 | 0 | 0.2 | 0.91 | 16 | 600 | 5 | A |
| Example 107 | LiCl:KCl:NaF = 56:41:3 | (NH₄)₂SiF₆ | 0.5 | 773 | 2.7 | 2.0 | 0 | 0.2 | 0.91 | 16 | 600 | 4 | A |
| Example 108 | LiCl:KCl:NaF = 56:41:3 | Na₂SiF₆ | 0.02 | 773 | 2.7 | 2.0 | 0 | 0.2 | 0.91 | 16 | 600 | 3 | A |
| Example 109 | LiCl:KCl:NaF = 56:41:3 | Na₂SiF₆ | 5.0 | 773 | 2.7 | 2.0 | 0 | 0.2 | 0.91 | 16 | 600 | 5 | A |
| Example 110 | LiCl:KCl:NaF = 55:43:2 | Na₂SiF_{ó} | 0.5 | 773 | 2.7 | 2.0 | 0 | 0.2 | 0.91 | 16 | 600 | 5 | A |
| Example 111 | LiCl:KCl:LiF = 56:41:3 | Na₂SiF₆ | 0.5 | 773 | 2.7 | 2.0 | 0 | 0.2 | 0.91 | 16 | 600 | 5 | A |
| Example 112 | LiCl:KCl:KF = 56:41:3 | Na₂SiF₆ | 0.5 | 773 | 2.7 | 2.0 | 0 | 0.2 | 0.91 | 16 | 600 | 5 | A |
| Example 113 | LiCl:KCl:NaF = 56:41:3 | K₂SiF₆ | 0.5 | 773 | 2.7 | 2.0 | 0 | 0.2 | 0.91 | 16 | 600 | 5 | A |
| Example 114 | LiCl:KCl:NaF = 56:41:3 | Li₂SiF₆ | 0.5 | 773 | 2.7 | 2.0 | 0 | 0.2 | 0.91 | 16 | 600 | 5 | A |

As shown in Table 2, the silicon layers of Examples 104 to 114, which were formed by constant-current pulse electrolysis, had high adhesion to copper foil, similarly to the silicon layer of Example 101.

The results of layer thickness of Examples 101, 107, 113, and 114 demonstrate that in the cases where silicon-containing alkali metal salts were used as Si sources (Examples 101, 113, and 114), as compared with the case where a silicon-containing ammonium salt was used as a Si source (Example 107), thicker silicon layers was formed.

Examples 1 and 2 provided examples of constant-potential pulse electrolysis, and Examples 101 to 114 provided examples of constant-current pulse electrolysis.

Comparing constant-potential pulse electrolysis with constant-current pulse electrolysis shows that a dense and flat silicon layer is easily formed more by constant-current pulse electrolysis than by constant-potential pulse electrolysis. This in probably due to the following reason.

Specifically, in Examples 1 and 2 (constant-potential pulse electrolysis), as described above, the conditions of constant-potential pulse electrolysis were determined based on the cyclic voltammetry results as follows: electrodeposition potential (Turn-on time), -0.15 V; electrodeposition cessation potential (Turn-off time), -0.1 V. The electrodeposition cessation potential was set to -0.1 V because electrodeposition and dissolution would be unlikely to occur. Under this Turn-off time condition, however, the current does not necessarily completely become 0, and electrodeposition or dissolution may slightly occur. At such a moment of switching from pseudo-Turn-off time to Turn-on time, electrodeposition nuclei are not always adequately generated. Thus, in constant-potential pulse, it is difficult to completely switch a current to 0 (zero) at Turn-off time.

By contrast, in constant-current potential, the current at Turn-off time is completely switched to 0 (zero), as described in Examples 101 to 114. This gives a rapid rise of a current at the moment of switching from Turn-off time to Turn-on time to adequately generate electrodeposition nuclei, facilitating the formation of a dense and flat silicon layer.

The formation of a dense and flat silicon layer by constant-current pulse electrolysis will be exemplified in Example 115.

### Example 115

A silicon-plated Ag sheet was produced in the same manner as in Example 101 except that a Ag sheet was used as a cathode, and the conditions of constant-current pulse electrolysis were changed as follows: current value at ON condition, 1.0 A/dm²; Turn-on time, 0.9 second; Turn-off time, 0.1 seconds (i.e., frequency, 1 Hz; duty ratio, 0.90), total quantity of electricity, 12.8 Ccm⁻²; total Turn-on time, 1,280 seconds.

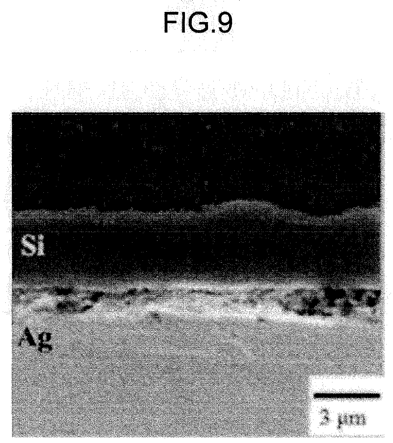

FIG. 9 shows an SEM micrograph of a cross section of the silicon-plated Ag sheet.

In Example 115, as shown in FIG. 9, a dense and flat silicon layer ("Si" in FIG. 9) was successfully formed on the Ag sheet ("Ag" in FIG. 9) by constant-current pulse electrolysis.

### Example 201

An example of the use of the silicon-plated metal sheet produced by the production method of the disclosure as a lithium-ion secondary battery negative electrode will now be described.

### Production of Silicon-Plated Copper Foil (Lithium-Ion Secondary Battery Negative Electrode)

A silicon-plated copper foil was produced under the same conditions as in Example 102 except that the total quantity of electricity was changed to 32 Ccm⁻². In the following, the silicon-plated copper foil was used as a lithium-ion secondary battery negative electrode.

In this example, a dendritic silicon layer of the silicon-plated copper foil functions as a negative electrode active material layer of a lithium-ion secondary battery negative electrode.

### Production of Lithium-Ion Secondary Battery

Using the above-described lithium-ion secondary battery negative electrode (silicon-plated copper foil) as a negative electrode and metallic lithium as a positive electrode, a lithium-ion secondary battery was produced.

Specifically, the negative electrode and the positive electrode were layered on each other with a commercially available separator sandwiched therebetween, and an electrolyte solution was injected into the separator in the layered body. The layered body was then enclosed in a 2032 coin cell using a coin cell caulker to produce a lithium-ion secondary battery in the form of a coin battery.

The separator used here was a polypropylene (PP) porous film, and the electrolyte solution used was 1 mol/L of LiPF₆ (EC:DEC = 1:1 vol%).

### Charge-Discharge Test of Lithium-Ion Secondary Battery

Using the lithium-ion secondary battery obtained, a charge-discharge test in which a cycle involving charging to 0 V (vs Li⁺/Li) and discharging to 1.5 V (vs Li⁺/Li) was repeated was performed under the conditions shown in Table 3. This charge-discharge test was carried out in a thermostatic chamber at 25°C.

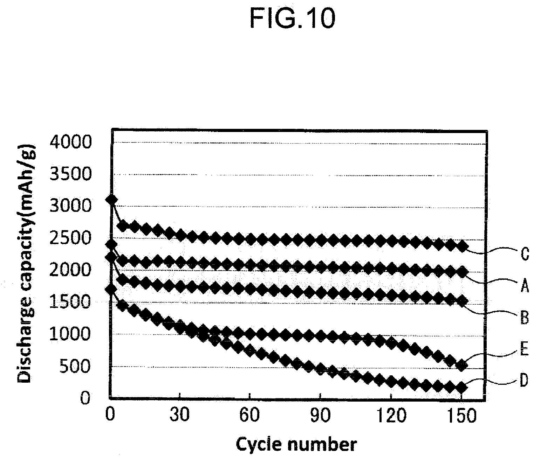

The results are shown in Table 3 and FIG. 10.

### Comparative Example 201

Commercially available nanosilicon particles (average particle size: 30 nm) and a binder (polyvinylidene fluoride (PVDF)) were mixed in a dispersant (N-methyl-2-pyrrolidone (NMP)) in a composition ratio of the nanosilicon particles to the binder of 9:1, thereby preparing an electrode slurry. The electrode slurry was then applied to a copper foil (10 µm in thickness, 2 cm² in size), and the dispersant was sufficiently dried at 120°C to obtain a lithium-ion secondary battery negative electrode.

The production of a lithium-ion secondary battery and the charge-discharge test were carried out in the same manner as in Example 201 except that the lithium-ion secondary battery negative electrode obtained was used.

The results are shown in Table 3 and FIG. 10.

### Comparative Example 202

The same procedure as in Comparative Example 201 was repeated except that polyimide was used as a binder in place of PVDF, and the dispersant was dried at 120°C and then further dried at 240°C for 12 hours.

The results are shown in Table 3 and FIG. 10.

FIG. 10 is a graph showing the charge-discharge test results of Example 201, Comparative Example 201, and Comparative Example 202.

In FIG. 10, symbols A to C show the charge-discharge test results of Example 201. The symbol A corresponds to "Charging and Discharging Rate: 1 C (1 hour)" in Table 3; the symbol B corresponds to "Charging and Discharging Rate: 2 C (30 minutes)" in Table 3; and the symbol C corresponds to "Charging and Discharging Rate: 0.2 C (5 hours)" in Table 3.

In FIG. 10, symbols D and E respectively show the charge-discharge test results of Comparative Examples 201 and 202.

**Table 3**

| | Active Material of Negative Electrode (Figure in Parentheses: Layer Thickness) | Charging and Discharging Rate (Charging and Discharging Time) | Initial Discharge Capacity (mAh/g) | Discharge Capacity after 150 cyc (mAh/g) |
|---|---|---|---|---|
| Example 201 | dendritic silicon layer (10 µm) | 1 C (1 hour) | 2400 | 2000 |
| | | 2 C (30 minutes) | 2200 | 1550 |
| | | 0.2 C (5 hours) | 3100 | 2400 |
| Comparative Example 201 | 30 nm nanosilicon + PVDF (50 µm) | 0.2 C (5 hours) | 1700 | 200 |
| Comparative Example 202 | 30 nm nanosilicon + polyimide (50 µm) | 0.2 C (5 hours) | 1700 | 550 |

| | | | | |
|---|---|---|---|---|
| "cyc" means "cycle". "PVDF" means polyvinylidene fluoride. | | | | |

As can be seen from Table 3 and FIG. 10, the lithium-ion secondary battery of Example 201 has a higher initial discharge capacity than the lithium-ion secondary batteries of Comparative Example 201 and Comparative Example 202. In addition, the lithium-ion secondary battery of Example 201 shows a slower change than the lithium-ion secondary batteries of Comparative Example 201 and Comparative Example 202 after charging and discharging under the same conditions.

These facts suggest that the lithium-ion secondary battery negative electrode of Example 201 has high resistance to deformation due to a volume expansion that accompanies charging and discharging. This is probably because the dendritic shape of the Si crystal grains included in the negative electrode active material layer of the lithium-ion secondary battery negative electrode of Example 201 causes a volume expansion that accompanies lithium absorption to be absorbed between primary limbs and/or branches of the dendrite.

As described above, the lithium-ion secondary battery negative electrode of Example 201 achieved a dramatically increased capacity and a dramatically prolonged service life.

Comparing Example 201 with Comparative Examples 201 and 202 shows that more than a certain amount of binder leads to a decrease in capacity.

The lithium-ion secondary battery negative electrode of Example 201 has a high capacity because of the absence of a binder. The lithium-ion secondary battery negative electrode of Example 201 has high durability despite the absence of a binder.

The example of the use of the silicon-plated metal sheet produced by the production method of the disclosure as a lithium-ion secondary battery negative electrode has been described above.

The silicon-plated metal sheet produced by the production method of the disclosure can also be used in applications (e.g., silicon solar cells) other than lithium-ion secondary battery negative electrodes.

## Claims

1. A method of producing a silicon-plated metal sheet, comprising:
melting at least one of a silicon-containing alkali metal salt or a silicon-containing ammonium salt in a molten salt comprising lithium chloride, potassium chloride, and an alkali metal fluoride to prepare a molten-salt electrolytic bath; and
performing constant-current pulse electrolysis or constant-potential pulse electrolysis with a metal sheet, serving as a cathode, immersed in the molten-salt electrolytic bath under conditions of a pulse duration of from 0.1 seconds to 3.0 seconds and a duty ratio of from 0.5 to 0.94 to thereby form a silicon layer on the metal sheet.

2. The method of producing a silicon-plated metal sheet according to claim 1, wherein the alkali metal fluoride is at least one selected from the group consisting of sodium fluoride, lithium fluoride, and potassium fluoride.

3. The method of producing a silicon-plated metal sheet according to claim 1 or 2, wherein the molten-salt electrolytic bath is prepared by melting at least the silicon-containing alkali metal salt in the molten salt.

4. The method of producing a silicon-plated metal sheet according to any one of claims 1 to 3, wherein the silicon-containing alkali metal salt is Na₂SiF₆.

5. The method of producing a silicon-plated metal sheet according to any one of claims 1 to 4, wherein the pulse duration in the constant-current pulse electrolysis or the constant-potential pulse electrolysis totals from 60 seconds to 1,800 seconds.

6. The method of producing a silicon-plated metal sheet according to any one of claims 1 to 5, wherein the metal sheet is a metal foil having a thickness of 10 µm to 15 µm.

7. The method of producing a silicon-plated metal sheet according to any one of claims 1 to 6, wherein the molten salt contains the alkali metal fluoride in an amount of from 2 mol% to 3.5 mol%.

8. The method of producing a silicon-plated metal sheet according to any one of claims 1 to 7, wherein the molten salt contains the lithium chloride in an amount of from 53 mol% to 59 mol%, the potassium chloride in an amount of from 38 mol% to 44 mol%, and the alkali metal fluoride in an amount of from 2 mol% to 3.5 mol%.

9. The method of producing a silicon-plated metal sheet according to any one of claims 1 to 8, wherein the molten-salt electrolytic bath contains the silicon-containing alkali metal salt and the silicon-containing ammonium salt in a total amount of from 0.01 mol% to 5.0 mol% with respect to a total amount of the molten salt.

10. The method of producing a silicon-plated metal sheet according to any one of claims 1 to 9, wherein the silicon layer is formed by the constant-current pulse electrolysis under the conditions.

11. The method of producing a silicon-plated metal sheet according to claim 10, wherein the constant-current pulse electrolysis is carried out at a cathode current density during turn-on time of 0.3 A/dm² to 3.0 A/dm².

12. The method of producing a silicon-plated metal sheet according to any one of claims 1 to 11, wherein the constant-current pulse electrolysis or the constant-potential pulse electrolysis is carried out with the metal sheet immersed in the molten-salt electrolytic bath maintained at a temperature of from 473 K to 873 K.

13. The method of producing a silicon-plated metal sheet according to any one of claims 1 to 12, wherein the silicon layer is a dendritic silicon layer comprising 99% by mass or more Si with the remainder being impurities.

## Patentansprüche

1. Ein Verfahren zur Herstellung eines siliziumplattierten Metallblechs, umfassend:
Schmelzen mindestens eines aus einem Silizium enthaltenden Alkalimetallsalzes oder eines Silizium enthaltenden Ammoniumsalzes in einem geschmolzenen Salz, umfassend Lithiumchlorid, Kaliumchlorid und ein Alkalimetallfluorid, um ein Salzschmelze-Elektrolytbad herzustellen; und Durchführen einer Konstantstrompuls-Elektrolyse oder
Konstantpotentialpuls-Elektrolyse mit einem Metallblech, welches als Kathode dient, eingetaucht in das Salzschmelze-Elektrolytbad unter Bedingungen einer Pulsdauer von 0,1 Sekunden bis 3,0 Sekunden und einer relativen Einschaltdauer (duty ratio) von 0,5 bis 0,94, um dadurch eine Siliziumschicht auf dem Metallblech zu bilden.

2. Das Verfahren zur Herstellung eines siliziumplattierten Metallblechs gemäß Anspruch 1, wobei das Alkalimetallfluorid mindestens eines ist, ausgewählt aus der Gruppe bestehend aus Natriumfluorid, Lithiumfluorid und Kaliumfluorid.

3. Das Verfahren zur Herstellung eines siliziumplattierten Metallblechs gemäß Anspruch 1 oder 2, wobei das Salzschmelze-Elektrolytbad durch Schmelzen von mindestens dem Silizium enthaltenden Alkalimetallsalz in dem geschmolzenem Salz hergestellt ist.

4. Das Verfahren zur Herstellung eines siliziumplattierten Metallblechs gemäß einem der Ansprüche 1 bis 3, wobei das Silizium enthaltende Alkalimetallsalz Nk₂SiF₆ ist.

5. Das Verfahren zur Herstellung eines siliziumplattierten Metallblechs gemäß einem der Ansprüche 1 bis 4, wobei die Pulsdauer in der Konstantstromimpuls-Elektrolyse oder der Konstantpotentialpuls-Elektrolyse insgesamt 60 Sekunden bis 1800 Sekunden beträgt.

6. Das Verfahren zur Herstellung eines siliziumplattierten Metallblechs gemäß einem der Ansprüche 1 bis 5, wobei das Metallblech eine Metallfolie mit einer Dicke von 10 µm bis 15 µm ist.

7. Das Verfahren zur Herstellung eines siliziumplattierten Metallblechs gemäß einem der Ansprüche 1 bis 6, wobei das geschmolzene Salz das Alkalimetallfluorid in einer Menge von 2 Mol-% bis 3,5 Mol-% enthält.

8. Das Verfahren zur Herstellung eines siliziumplattierten Metallblechs gemäß einem der Ansprüche 1 bis 7, wobei das geschmolzene Salz das Lithiumchlorid in einer Menge von 53 Mol-% bis 59 Mol-%, das Kaliumchlorid in einer Menge von 38 Mol-% bis 44 Mol-% und das Alkalimetallfluorid in einer Menge von 2 Mol-% bis 3,5 Mol-% enthält.

9. Das Verfahren zur Herstellung eines siliziumplattierten Metallblechs gemäß einem der Ansprüche 1 bis 8, wobei das Salzschmelze-Elektrolytbad das Silizium enthaltende Alkalimetallsalz und das Silizium enthaltende Ammoniumsalz in einer Gesamtmenge von 0,01 Mol-% bis 5,0 Mol-%, bezogen auf eine Gesamtmenge des geschmolzenen Salzes, enthält.

10. Das Verfahren zur Herstellung eines siliziumplattierten Metallblechs gemäß einem der Ansprüche 1 bis 9, wobei die Siliziumschicht durch die Konstantstrompuls-Elektrolyse unter den Bedingungen gebildet ist.

11. Das Verfahren zur Herstellung eines siliziumplattierten Metallblechs gemäß Anspruch 10, wobei die Konstantstrompuls-Elektrolyse bei einer Kathodenstromdichte während der Einschaltzeit von 0,3 A/dm² bis 3,0 A/dm² durchgeführt wird.

12. Das Verfahren zur Herstellung eines siliziumplattierten Metallblechs gemäß einem der Ansprüche 1 bis 11, wobei die Konstantstrompuls-Elektrolyse oder die Konstantpotentialpuls-Elektrolyse mit dem in dem Salzschmelze-Elektrolysebad, welches bei einer Temperatur von 473 K bis 873 K gehalten wird, eingetauchten Metallblech durchgeführt wird.

13. Das Verfahren zur Herstellung eines siliziumplattierten Metallblechs gemäß einem der Ansprüche 1 bis 12, wobei die Siliziumschicht eine dendritische Siliziumschicht, umfassend 99 Massen-% oder mehr Si ist, wobei der Rest Verunreinigungen darstellt.

## Revendications

1. Procédé de production d'une feuille métallique revêtue de silicium, comprenant :
la fusion d'au moins un parmi un sel de métal alcalin contenant du silicium ou un sel d'ammonium contenant du silicium dans un sel fondu comprenant du chlorure de lithium, du chlorure de potassium, et un fluorure de métal alcalin pour préparer un bain électrolytique de sel fondu ; et
la mise en oeuvre d'une électrolyse à impulsions à courant constant ou d'une électrolyse à impulsions à potentiel constant, une feuille métallique, servant de cathode, étant immergée dans le bain électrolytique de sel fondu dans des conditions d'une durée d'impulsion de 0,1 seconde à 3,0 secondes et d'un facteur de marche (duty ratio) de 0,5 à 0,94 pour former de ce fait une couche de silicium sur la feuille métallique.

2. Procédé de production d'une feuille métallique revêtue de silicium selon la revendication 1, dans lequel le fluorure de métal alcalin est au moins un sélectionné dans le groupe constitué par le fluorure de sodium, le fluorure de lithium, et le fluorure de potassium.

3. Procédé de production d'une feuille métallique revêtue de silicium selon la revendication 1 ou 2, dans lequel le bain électrolytique de sel fondu est préparé en faisant fondre au moins le sel de métal alcalin contenant du silicium dans le sel fondu.

4. Procédé de production d'une feuille métallique revêtue de silicium selon l'une quelconque des revendications 1 à 3, dans lequel le sel de métal alcalin contenant du silicium est Na₂SiF₆.

5. Procédé de production d'une feuille métallique revêtue de silicium selon l'une quelconque des revendications 1 à 4, dans lequel la durée d'impulsion dans l'électrolyse à impulsions à courant constant ou l'électrolyse à impulsions à potentiel constant atteint au total de 60 secondes à 1 800 secondes.

6. Procédé de production d'une feuille métallique revêtue de silicium selon l'une quelconque des revendications 1 à 5, dans lequel la feuille métallique est une feuille métallique présentant une épaisseur de 10 µm à 15 µm.

7. Procédé de production d'une feuille métallique revêtue de silicium selon l'une quelconque des revendications 1 à 6, dans lequel le sel fondu contient le fluorure de métal alcalin à raison de 2 % en moles à 3,5 % en moles.

8. Procédé de production d'une feuille métallique revêtue de silicium selon l'une quelconque des revendications 1 à 7, dans lequel le sel fondu contient le chlorure de lithium à raison de 53 % en moles à 59 % en moles, le chlorure de potassium à raison de 38 % en moles à 44 % en moles, et le fluorure de métal alcalin à raison de 2 % en moles à 3,5 % en moles.

9. Procédé de production d'une feuille métallique revêtue de silicium selon l'une quelconque des revendications 1 à 8, dans lequel le bain électrolytique de sel fondu contient le sel métallique alcalin contenant du silicium et le sel d'ammonium contenant du silicium à raison totale de 0,01 % en moles à 5,0 % en moles par rapport à une quantité totale du sel fondu.

10. Procédé de production d'une feuille métallique revêtue de silicium selon l'une quelconque des revendications 1 à 9, dans lequel la couche de silicium est formée par l'électrolyse à impulsions à courant constant dans les conditions.

11. Procédé de production d'une feuille métallique revêtue de silicium selon la revendication 10, dans lequel l'électrolyse à impulsions à courant constant est effectuée à une densité de courant de cathode pendant un temps de mise sous tension de 0,3 A/dm² à 3,0 A/dm².

12. Procédé de production d'une feuille métallique revêtue de silicium selon l'une quelconque des revendications 1 à 11, dans lequel l'électrolyse à impulsions à courant constant ou l'électrolyse à impulsions à potentiel constant est effectuée avec la feuille métallique immergée dans le bain électrolytique de sel fondu maintenu à une température de 473 K à 873 K.

13. Procédé de production d'une feuille métallique revêtue de silicium selon l'une quelconque des revendications 1 à 12, dans lequel la couche de silicium est une couche de silicium dendritique comprenant 99 % en masse ou plus de Si, le reste étant des impuretés.
